# EUROPEAN PATENT APPLICATION

(11) **EP 1 310 859 A2**
(43) Date of publication of application: **14.05.2003**
(21) Application number: 02014969.6
(22) Date of filing: 09.07.2002
(51) Int. Cl.: G06F 1/16

(54) **Display system**

(30) Priority: 12.11.2001 US 338937 P; 26.02.2002 US 86166
(71) Applicant: Xybernaut Corporation, Fairfax, Virginia 22033 (US)
(72) Inventor: Adams, Michael DeWayne, Saratoga, CA.95070 (US)
(74) Representative: Borchert, Uwe Rudolf, Dipl.-Ing.

(57) **Abstract**

There is described a display system wherein the system provides a user with a plurality of displays for view information from a computer including at least one display which is body-supported, such as a head-mounted display. The system reduces the information, which normally would be displayed in a head-mounted display, thus reducing a user's dependence on the head-mounted display.

## Description

The present invention relates to display systems and the like. Preferably, at least one display is body-worn and connected to a mobile computer.

Portable and body-worn computers are becoming increasingly popular. It is known to use wearable or user-supported computers that can be operated in a hands-free manner; an example is the MOBILE ASSISTANT by Xybernaut Corporation. An important feature of these computers is that they permit the user to have freedom to use his or her hands for repairing or for other manual functions while still able to use a fully functional computer. As above noted, one of the most well known of these user supported computers is the MOBILE ASSISTANT computer line available from Xybernaut Corporation of Fairfax, VA, USA. MOBILE ASSISTANT is a registered trademark of Xybernaut Corporation.

U.S. patents Nos. 5,305,244 and 5,844,824 describe the details and components used in said user-supported computers. U.S. 5,844,824 describes and claims several hands-free activation means and other significant improvements or modifications in user supported computers. Both U.S. patents Nos. 5,305,244 and 5,844,824 are owned by the assignee of the present application and both describe in one embodiment a rigid computer that has all components in a single housing. The disclosure of U.S. patents Nos. 5,305,244 and 5,844,824 are incorporated by reference in the present disclosure.

Other patents describing wearable computers are U.S. patents Nos. 5,285,398 and 5,491,651. Both of these patents disclose a non-rigid or a belt worn computer containing the elements or components of a computer in several different housings or pockets. In U.S. patent No. 5,285,398 the plurality of computing elements are located in separate pockets on the belt and a flexible signal relaying means connects all of the elements for computing. A protective covering is used for enclosing said computer elements. In U.S. patent No. 5,491,651 a similar belt computer is described and claimed in which the signal relaying means, the length of which between any two computing elements is greater than the length of the wearable member between any two computing elements. In both U.S. patents Nos. 5,285,398 and 5,491,651 the flexible wearable computer is in the form of a belt comprising around its periphery sequentially positioned computer elements.

The popularity of wearable computers has also increased the use of head-mounted displays (HMDs). However, concern has been expressed recently about the possible health problems, which may arise from the use of these displays. Specifically, reports suggest that the head-mounted display may cause or contribute to eye disorders such as myopia and create the feeling of motion sickness or nausea during prolonged use.

For example, in an article entitled "Effects on Visual Functions Following Several Hours' Usage of A Head Mounted Display" published in Journal of Japanese Ophthalmological Society, Naoto et al investigated the effects of viewing video movies with a head-mounted display for 4 to 6 hours on visual functions such as refraction, visual acuity, and accommodation-vergence system. Results of the study indicate that significant transient myopia was found following 4 hours' viewing in some individuals and others suffered from hyperopia.

Moreover, The Edinburgh Virtual Environment Laboratory of the University of Edinburgh conducted a study lasting several months to investigate the potential problems resulting from the use of current HMDs. The Edinburgh study took 20 young adults, free from occular disorders, sat them on a "tethered" bicycle and presented them with the task of cycling around a virtual road network that spanned a rural setting. The subjects were screened by an optometrist prior to commencement of their cycling session and after 10 minutes of low-intensity cycling. The screening test took measurements of distance vision, binocular fusion and convergence and a significant number of subjects showed signs of binocular stress. Over half of the subjects also reported symptoms of blurred vision.

Still further, in "The Nauseogenicity of Using a Head-Mounted Display, Configured as a Personal Viewing System, for an Hour", Howarth et al discloses the results of a study conducted on twenty subjects who played chess for an hour while wearing an HMD and played the same game on a conventional PC using a 17" SVGA color monitor. All twenty subjects reported a steady increase in the level of nausea they experienced over the total period the HMD was worn. In contrast, the game played and viewed on the conventional PC did not cause nausea level to change significantly.

In light of these findings on the possible health hazards of head mounted display, it would be preferable to reduce the amount of exposure a user typically would have to interact with these displays. One way would be to have the user depend as little as possible on the information displayed on the head-mounted display and have the head-mounted display either augment or enhance the information a user would get from another display either supported by the user, such as neck-hung or wrist worn display, or not supported by the user, such as a CRT or flat panel displays. The computer driving the displays would then be responsible for presenting minimal amount of data to be displayed on the head-mounted display and have the user rely on the alternate body-supported display or conventional display for the full function display.

Controlling a plurality of displays with a single processor is known in the art. U.S. patent No. 6,118,413 discloses a video controller for controlling at least two video displays having independent refresh rates and pixel resolutions. The video controller either supports one or two separate data paths for each video display. The two-path method works by attaching an extra bit to each word or word passing through the data path indicating the destination of the video data.

U.S. patent No. 5,694,141 discloses a computer system that includes a video display controller, which provides for simultaneous display of different images on different displays. The video display controller includes a display data processing circuit which is variably configured to provide decoding of data words from a first bit-word format as received from a display first-in-first-out memory to a second bit-word format as required by a particular one of the pair of display devices. The display data processing circuit is variably configurable to allow the pair of display devices to each receive driving signals providing the simultaneous differing images, and which driving signals originate with the bit-words allocated to each particular one of the pair of display devices.

U.S. patent No. 5,874,928 discloses a method and apparatus for a display controller connected to a host computer and driving a plurality of displays, the displays being refreshed independently. A plurality of displays are driven simultaneously by first storing a set of graphics data which represents the data to be displayed into a display memory. Once stored, the graphics data is read out of the display memory into a video buffer. Thereafter, the graphics data is read out of the video buffer at a rate determined by a video clock signal having a first clock rate to provide a first graphics data stream. This first graphics data stream is then processed through a first converter, again at a rate determined by the video clock signal having the first clock rate, to derive a first video data stream having an analog portion and a digital portion. The analog portion is sent to a first display, preferably a CRT type of display, to drive the display. The digital portion of the first video data stream is then further converted into a second video data stream, which is used to drive the second display, preferably, a LCD type of display.

U.S. patent No. 5,977,933 discloses a display control system where a computer drives a built-in flat panel (LCD type) display as well as a separate external CRT display or NTSC/PAL television monitor from a single frame buffer. Either identical or different image may be displayed on the displays and independent clocking is provided. The single frame buffer stores display data for two video data paths and each data path includes a display controller, which provides display control timing. The first data path, which drives the CRT or television display, also includes a suitable digital to analog converter and other circuitry for generating the timing signals for the CRT or television display. The second data path, which drives the flat panel display, includes a second display controller and flat panel display interface circuit.

However, the prior art display control systems described above have not been utilized in a mobile environment. Therefore, there is a need for a display system which supports a plurality of displays, at least one of which is body-worn and optimized for a mobile user.

It is therefore an object of this invention to provide a display system which is devoid of the above mentioned shortcomings.

A further object of this invention is to provide a novel display system where at least one display is supported by the body of the user.

Another object of this invention is to provide a display system that reduces a user's dependency on a head-mounted display.

Still another object of this invention is to provide a display system in which a head-mounted display is used to enhance another body-worn display.

Another object of this invention is to provide a head-mounted display, which provides context-specific information.

These and additional objects of the present invention are accomplished generally by providing a display system driven by a mobile computer that supports a plurality of primary displays where at least one display is body supported, for example a head-mounted display. The primary display is a fully function display, which could be neck-hung, wrist-mounted, or otherwise, body-supported as well as desktop monitor such as a CRT or LCD. A fully function display as used in this disclosure and the claims that follow is defined to be a display, either CRT or LCD, which when connected to a conventional general purpose computer provides a user with a full resolution image capable of displaying VGA (in text mode VGA systems provide a resolution of 720 by 400 pixels and in graphics mode, the resolution is either 640 by 480 (with 16 colors) or 320 by 200 (with 256 colors)) or better resolution. The head mounted display and the primary display may be used to view the same graphical data, to display different aspects of the same data, or to display different graphical data. The primary display will provide the user with a full functional display while the head-mounted display is used to augment the data displayed on the primary display. For example, the head-mounted display will provide the user with context specific content, summary data, and/or location data such as latitude and longitude from a GPS receiver preferably integrated with the body-worn computer. This context specific display will be a display with lesser resolution capability then the full functional display, such as quarter VGA (320 by 240 with either 16-bit color or monochrome).

In a first embodiment, a wearable computer user would use both a wrist-worn and a head-mounted display. The wrist-worn display would provide the user with a full functional display while the head-mounted display would serve to supplement the data the user receives through the wrist-worn display. The head-mounted display would function as a limited display providing the user with context specific information. For example, if a user was out in the field making measurement of certain physical parameters, such a temperature, voltage, current, etc., then the head-mounted display would display just that information, for example a specific measurement of a voltage, while the wrist-mounted display would provide the user with a particular schematic of the system he was testing.

In an alternative embodiment, the computer is located in a vehicle and the user is either wired or wirelessly connected to the computer. The user interacts with the computer via an input device which is either wired or wirelessly connected to the user and a head-mounted display which provides limited contextual information to the user. A full functional display is located with the computer, on the user, or both. For example, the user works for a telephone company and needs to climb a telephone pole to perform routine maintenance. The computer would be located in the company van with optionally a full function display. The user would be wireless connected to the computer located in the van and would be wearing a head-mounted display and optionally another full functional display, such as a wrist-worn display. The user, while performing maintenance up the pole, would be taking measurement of signal strength or other such parameters and would see the results displayed on the head-mounted display. The full function display would provide the user with a diagram or schematic of the particular telephone circuitry that he is engaged with.

Additional advantages and characteristics result from the following description of several embodiments of the invention in connection with the drawings. In the drawings are shown:
- Fig. 1: an embodiment of the invention where a computer drives two user-supported displays; and
- Fig. 2: another embodiment of the invention where a computer drives three displays where two are user-supported.

Discussion of the invention will now be made with specific references to the drawing figures.

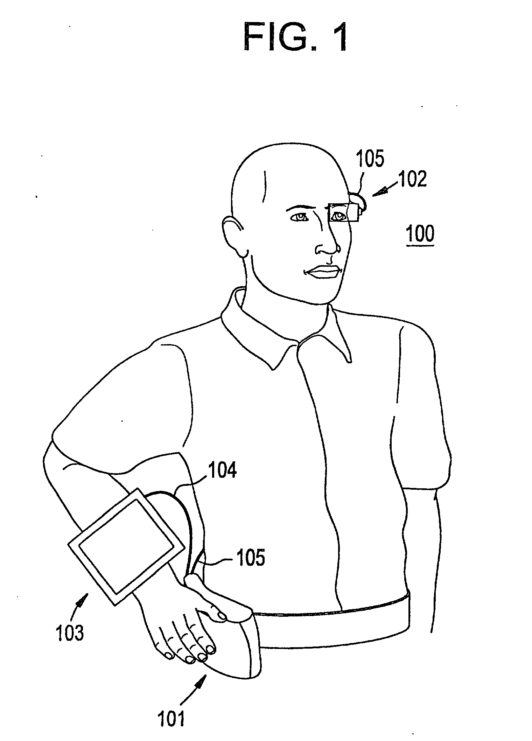

Fig. 1 illustrates the first embodiment of the instant invention indicated generally by reference number 100. A user is shown wearing a wearable computer 101 and two body-supported displays; a head-mounted display 102 and a wrist worn display 103. The computer 101 which controls both displays is a fully function computer. The wrist worn 103 display acting as the primary display for the user is connected to the computer 101 via cable 104, which provides both power and data to the display 103. The head-mounted display 102 is limited in functionality to displaying a minimal amount of data, such as context specific data and is connected to the computer via cable 105.

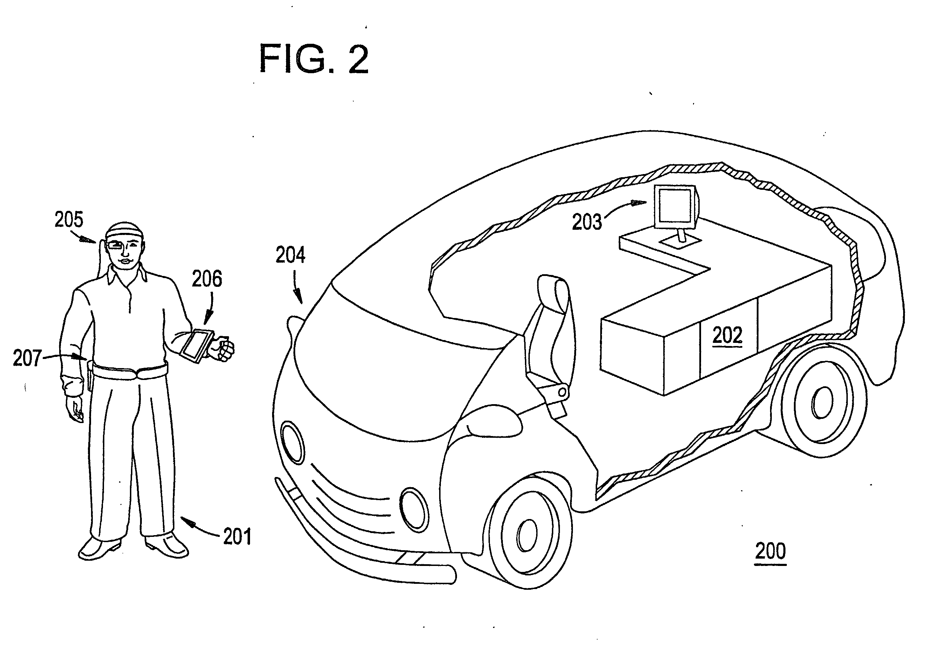

Fig. 2 illustrates an alternative embodiment of the instant invention indicated generally by reference number 200. In this embodiment a user 201 is wirelessly connected to a computer 202 and a fully functional display 203 located in a vehicle 204. Wireless protocols such as 802.11a or 802.11b as well as any future wireless protocols are contemplated for use with this invention.

The user 201 also wears a head-mounted display 205, which provides the user with limited contextual information, and a fully functional display, such as a wrist-worn display 206 both powered by battery 207.

The present embodiments of this invention are thus to be considered in all respects as illustrative and not restrictive; the scope of the invention being indicated by the appended claims rather than by the foregoing description. All changes that come within the meaning and range of equivalency of the claims are intended to be embraced therein.

### List of Reference signs

- 100: display system - first embodiment
- 101: wearable computer
- 102: head-mounted display
- 103: wrist-worn computer
- 104: cable
- 105: cable

- 200: display system - second embodiment
- 201: user
- 202: computer
- 203: display
- 204: vehicle
- 205: head-mounted display
- 206: wrist-worn display
- 207: battery

## Claims

1. A display system for displaying information from a computer, said system comprising:
a first computer display in electrical contact with said computer, said first display adapted to provide said user with limited contextual information; said computer being a general purpose computer;
a second computer display in electrical contact with said computer, said second computer display adapted to provide said user with a fully functional computer display;
said first and second displays being in electrical connection with each other, and at least one of said first and second computer displays being user supported.

2. The display system according to claim 1, **characterized in that** at least one of said first and second computer displays are user supported displays selected from the group consisting of head-mounted displays, flat panel displays, neck-hung displays, wrist-mounted displays and mixtures thereof.

3. The display system according to claim 1 or 2, **characterized in that** one of said first and second displays is a non-user supported display and one is a user supported display.

4. The display system according to any one of the preceding claims, **characterized in that** said computer is a user-supported computer, a mobile computer or a vehicle-mounted computer.

5. The display system according to any one of the preceding claims, **characterized in that** communication means are in electrical contact with said computer.

6. A display system for displaying information from a user-supported computer, said display system comprising:
a first user-supported display which outputs data from said computer to provide said user with limited contextual information;
a second user-supported display which outputs data from said computer to provide said user with a fully functional computer display;
said first and second user-supported displays being in electrical connection with each other and with a general purpose user-supported computer, said computer being a hands-free computer having activation means selected from the group consisting of audio activation means, electroencephalography activation means, eye-tracking activation means and mixtures thereof.

7. A display system for displaying information from a computer, the display system comprising:
a first computer display adapted to provide a user with limited contextual information, an alternate second computer display adapted to provide said user with a fully functional computer display; said first and said second displays selected from the group consisting of head-mounted displays, flat panel displays, neck-hung displays, wrist-mounted displays, non-user supported displays and mixtures thereof, at least one of said first and second computer displays supported by said user.

8. A display system for displaying information from a computer, the display system comprising:
a head-mounted display in electrical contact with said computer, said head-mounted display being worn on a user's head and which provides said user with limited contextual information;
a body-worn display in electrical contact with said computer, said body-worn display being supported by the body of said user and which provides said user with a fully functional computer display.

9. The display system according to claim 8, **characterized in that** said computer is a user-supported computer and comprises communication means and activation means selected from the group consisting of audio activation, electroencephalography activation means, eye-tracking activation means and mixtures thereof.

10. The display system according to claim 8 or 9, **characterized in that** said body-worn display is a wrist-worn display.
